Europäisches Patentamt

European Patent Office

Office européen des brevets

(11) Publication number: **0 206 653 B1**

(12) **EUROPEAN PATENT SPECIFICATION**

(45) Date of publication of patent specification: **21.10.92** (51) Int. Cl.5: **G06F 9/30**

(21) Application number: **86304493.9**

(22) Date of filing: **12.06.86**

(54) Method and means for loading and storing data in a reduced instruction set computer.

(30) Priority: **28.06.85 US 750810**

(43) Date of publication of application:
**30.12.86 Bulletin 86/52**

(45) Publication of the grant of the patent:
**21.10.92 Bulletin 92/43**

(84) Designated Contracting States:
**CH DE FR GB IT LI NL SE**

(56) References cited:

G.H. KATEVENIS: "Reduced instruction set computer architectures for VLSI" ACM Doctoral Dissertation Award 1984, Appendix A, pages 177-199, MIT Press, London, GB, "Detailed description of the RISC-II architecture"

ACM SIGPLAN NOTICES, vol. 17, no. 4, 1982, pages 39-47, ACM, New York, US; G. RADIN et al.: "The 801 minicomputer"

ELECTRO/80 CONFERENCE RECORD, Boston MA, 13th-15th May 1980, vol. 5, pages 1-10; A.C. HARTMANN: "Architectural issues in the design of the Intel R 8086 Microcomputer System"

(73) Proprietor: **Hewlett-Packard Company**
**P.O. Box 10301 3000 Hanover Street**
**Palo Alto California 94303-0890(US)**

(72) Inventor: **Baum, Allen J.**
**2310 Cornell Street**
**Palo Alto California 94306(US)**
Inventor: **Muchnick, Steven S.**
**5007 Diamond Heights Blvd**
**San Francisco California 94131(US)**
Inventor: **Lee, Ruby Bei-Loh**
**10382 Heney Creek Place**
**Cupertino California 95014(US)**

(74) Representative: **Colgan, Stephen James et al**
**CARPMAELS & RANSFORD 43 Bloomsbury Square**
**London WC1A 2RA(GB)**

Rank Xerox (UK) Business Services

EP 0 206 653 B1

## Description

Background and Summary of the Invention

In a prior art computer with microprogramming, the control section of such a computer generally is provided with an autonomous read-only storage. Each time a program instruction begins, the control unit generates an address to its read-only storage derived from the function or operation code of the instruction. This address locates what may be the first of a series of words which supply the control signals to the computer for carrying out the particular instruction being processed. Each instruction in effect generates a transfer to a microsubroutine associated with it, and the resultant step-by-step operation of the machine corresponds to the execution of a program on a very detailed level.

In such a computer in the prior art, program instructions generally comprise an operation code, i.e., the opcode, together with information relative to the location of the operands, that is, the data to be operated on. These operands sometimes may also have additional operational information. The length of the program instructions may be relatively long or relatively short depending on the quantity of data involved. The operating codes generally indicate the operation to be performed. Once the length of the operating code is established, it is possible to have only a certain fixed set of different operating codes and related program instructions. However, not all the operating codes which may theoretically be expressed with a certain number of bits, i.e., operating codes within the fixed set, are used to characterize program instructions for which the computer is provided with microprogramming resources. Generally, only a part or subset is used, and thus programming efficiency is degraded.

Also in a prior art computer, the memory of the computer provides the largest hardware cost. Therefore, the key to hardware speed and minimum size lies in efficient use of the memory. Fixed instruction length computers require the same number of bits for each instruction word regardless of the simplicity or complexity of the operation to be executed. As an example, many bits can be wasted in instructions which specify simple operations, while many instructions can be wasted in complex operations where an instruction's capability is limited by its length. Therefore, it is desired to design a computer with an instruction set which can perform all applications most efficiently.

To increase the efficiency of computers compared to the microprogramming used in the prior art, the concept of optimizing compilers is used and implemented (1) to compile programming languages down to instructions that are as unencumbered as microinstructions in a large virtual address space and (2) to make the instruction cycle time as fast as the technology would allow. Computers having such optimized compilers are designed to have fewer instructions than those in the prior art, and what few instructions they do have are simple and would generally execute in one cycle. Such computers have been aptly named reduced instruction set computers (RISCs). Instructions that are part of a reduced instruction set in a RISC machine and that provide increased efficiency in a novel way have been invented and are described herein.

Specifically, during the time a computer is executing a program, much of the execution time is spent, inside instruction loops. Many of these loops include accesses to array elements. Still another kind of instruction that requires frequent access inside loops is stack accessing. Invariably, these kinds of instructions require address modification of one sort or another. And since it is a frequent and repeatedly executed operation, address modification should be executed efficiently.

Reduced instruction set machines in the prior art typically use simple, primitive instructions to implement such loops. But these primitive instructions may increase the number of instructions in a loop and, hence, may increase execution time. Thus, a mechanism that allows instructions to automatically step along arrays or records and thereby minimize loop execution times becomes highly desirable.

In the prior art, computers have used the induction variable itself as an index to set up such a mechanism. Unfortunately, this type of system works only when an array step size is equal to the induction step size. Although this problem can be solved with a modification in optimizing compilers by changing the induction variable, other problems occur whenever more than one array with a different step size is used in the loop. Other approaches to automatic stepping are found in auto-increment and auto-decrement modes, which automatically step a base register by some fixed amount either before or after a reference. In these cases, the fixed amount for the step is usually the size of the element being addressed.

According to the present invention there is provided a computer system comprising:
    A. an instruction comprising:
        a. a first field specifying a base register;
        b. a second field specifying a displacement; and
        c. a third field specifying modification of a selected address; and
    B. means for performing operations in response to said instruction;
        characterised in that:
        said first, second and third fields form a single instruction suitable for operation within a single cycle of said computer system, and

wherein said displacement is either the value of an index shifted or unshifted or a displacement shifted by a data size as determined by fields embedded within said single instruction.

A computer system in accordance with the precharacterising clause of the preceding paragraph is disclosed in Electro/80 Conference Record, Boston MA, May 1980, Vol. 5 p. 1-10 - "Architectural issues in the design of the Intel® 8086 microcomputer system" by A.C. Hartmann.

A method of operating the above specified computer system, is also within the invention.

In keeping with the RISC philosophy of using simple operations that can be performed in one machine cycle by relatively simple hardware, only one main type of memory addressing is implemented for loading and storing instructions in the preferred embodiment of the computer system in accordance with the invention. In this memory addressing, the summation of the value of a base register with a displacement is used to determine a memory address. The displacement in preferred embodiments can be immediate data or the value of an index register.

In one preferred embodiment, only one major operation code is needed for instructions for loading or storing data, regardless of whether the displacement is an index register value or an immediate data. This embodiment of a single major opcode simplifies instructions and enables flexibility in loading and storing operations and performance of the operations in a single cycle. In this advantageous embodiment, codes are imbedded in fixed positions within the instruction to allow direct control. In contrast to that in the prior art, this embodiment allows control without further extensive decoding.

One example of the flexibility with only one major opcode for loading or storing data is the automatic address modification performed together with the loading or storing operation. In fact, this single instruction for automatic address modification requires such minimal decoding that most of the advantages of a microcode instruction are achieved.

In another embodiment, for example in the one major opcode described above, cache hints are imbedded in a fixed field in the instruction to supply information to a data cache memory. This optional information they supply may be used by a cache controller in the cache memory to reduce cache misses, to reduce memory traffic between cache and main memory, and to determine whether or not to prefetch the next cache line. In short, these cache hints are provided by instructions to improve the performance of a cache system.

A novel approach is used with the present invention to solve the problem of lengthy loop execution time. In accordance with this approach, a method of automatic address modification is provided. This method is linked to the operation of loading or storing data in a data structure itself and may be used for stepping through many data structures. The step increments can be varied so that the increments are different for different data structures. In accordance with the preferred embodiment of the invention, all memory reference instructions for either loading or storing data contain one bit that indicates whether the displacement is a register or a literal, viz., a constant, and another bit that indicates whether or not the base register should be updated with the effective address. If the displacement is a short literal, there is a further bit which specifies whether the address used to access memory is the preor post-modified base register; otherwise the post-modified value is used. And if the displacement is a register, then this bit specifies whether the register's value is to be shifted or not by the size of the data being loaded or stored. This operation allows stepping the address by either a variable displacement in a register, by data size, or by both.

In an alternate embodiment of the invention, programming language semantics is used to effect a large, fixed displacement to modify the address. As a consequence, there also exists a form of loading or storing instruction having a long displacement for modifying a base register. In this embodiment, pre- or post-modification is a function of the displacement sign, which determines a step direction of increments or decrements. This novel approach of specifying address modification does not use up any bits of the displacement. As a result, the displacement field in the instruction is of an optimal length that can accommodate most displacement values without necessarily resorting to an extra register like the prior art for holding the displacement value.

In these novel embodiments of the invention, the instruction set defined has both literal and variable step sizes which are independent of the unit size being accessed. In other words, the base address can be modified by either an index register or a signed literal value. In addition, the literal step mode allows the stepping to occur either before or after the access. This flexibility can be used for stacks growing in either direction. And since the step size is not tied to the element size being accessed, this stepping can be used to step through records even though only a field of the record is being accessed. Further, if the stepping is made by a variable amount, both larger step sizes than can be specified by a small literal and easier branching to offset pointers are achieved. For selecting pre- or post-modified address, only an additional multiplexer is required in the preferred embodiments of this invention.

## Brief Description of the Drawings

Figure 1 depicts instruction sets in accordance with the invention.

Figure 2 shows an embodiment of the invention in the form of an instruction sequence for long displacement load and store.

Figures 3A-3C show specific load examples of the instruction sequence of Figure 2; Figure 3A shows LOAD WORD, Figure 3B shows LOAD WORD MODIFY, and Figure 3C shows LOAD BYTE.

Figures 4A-4C show specific store examples of the instruction sequence of Figure 2; Figure 4A shows STORE WORD, Figure 4B shows STORE WORD MODIFY, and Figure 4C shows STORE BYTE.

Figure 5 shows an embodiment of the invention in the form of an instruction sequence for indexed load.

Figures 6A-6B show specific examples of the instruction sequence of Figure 5; Figure 6A shows LOAD WORD INDEXED and Figure 6B shows LOAD BYTE INDEXED.

Figure 7 shows an alternate embodiment of the invention in the form of an instruction sequence for short displacement load and store.

Figures 8A-8B show specific examples of the instruction sequence of Figure 7; Figure 8A shows LOAD WORD SHORT and Figure 8B shows LOAD BYTE SHORT.

Figures 9A-9C show specific examples of the instruction sequence of Figure 7; Figure 9A shows STORE WORD SHORT, Figure 9B shows STORE BYTE SHORT, and Figure 9C shows STORE BYTES SHORT.

Figure 10 illustrates an apparatus for address modification in accordance with the invention.

Figure 11 shows the format of the major operation code representing the instructions of Figures 5 and 7.

## Detailed Description of the Invention

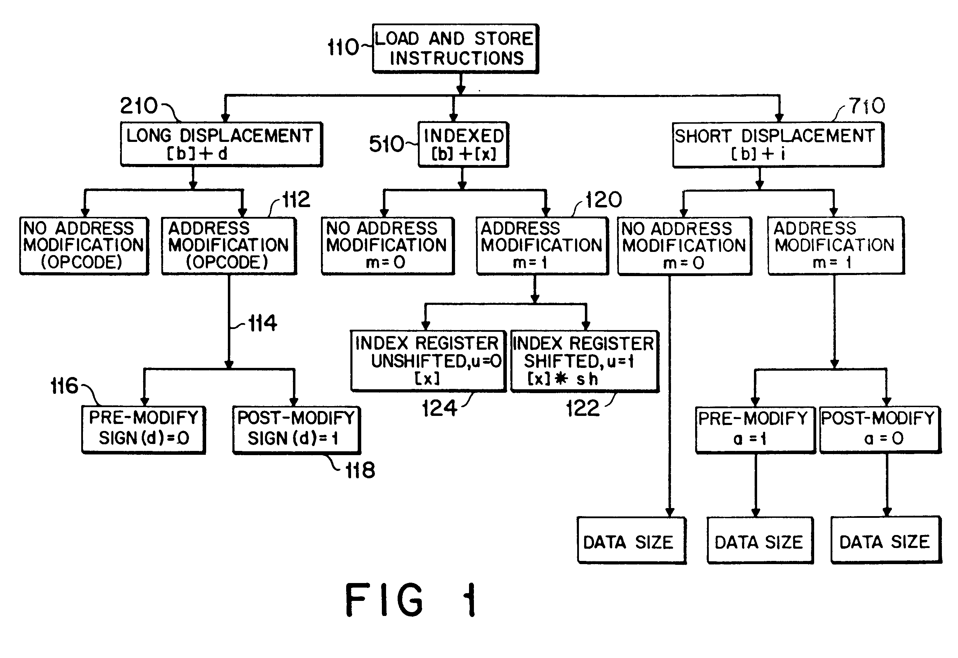

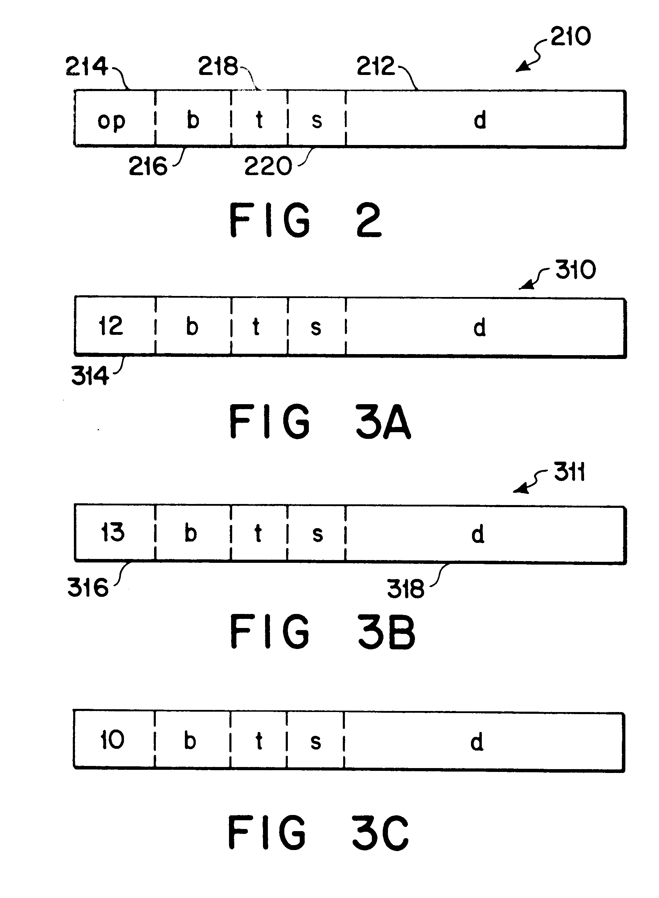

Basically, the means and method in accordance with the invention provide a set of instructions 110 as shown in Figure 1 for loading and storing data efficiently and expeditiously. Each instruction is designed such that it may be executed within a single cycle of the computer system. Examples of such instruction sets are illustrated in Figures 2, 5, and 7. Examples illustrating such instructions are shown in the remaining figures.

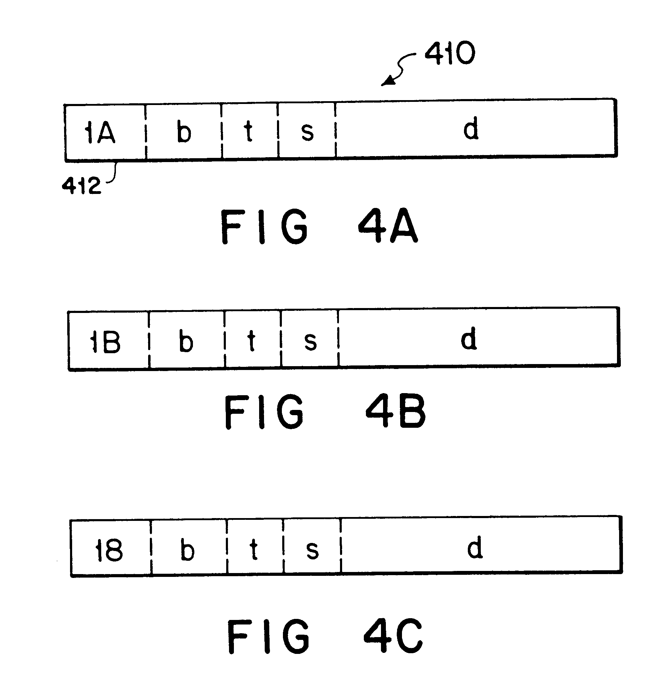

In the case of an instruction set for long displacement 210 as shown in Figure 2, a field "d" 212 is specified in the instruction sequence. This "d" field 212 defines the amount of displacement, or increment, a pointer, for example, in a register stack, moves. An address can also be modified with this instruction; this address modification 112 can be modified, for example, by a further field embedded in the instruction sequence 114; this field determines whether such a modification is to take place before data is stored or loaded 116, or after data is stored or loaded 118. This field is the sign bit for the displacement word 212. Examples of this long displacement instruction set are shown in Figures 3A-C for loading and in Figures 4A-C for storing. And because the sign bit is already part of the long displacement, no extra or special bit is required for providing this pre- or post-modification information so that whatever bit is available in the instruction string can be used for specifying the displacement. The net result is a displacement specifier that can represent most of the displacement values that are required.

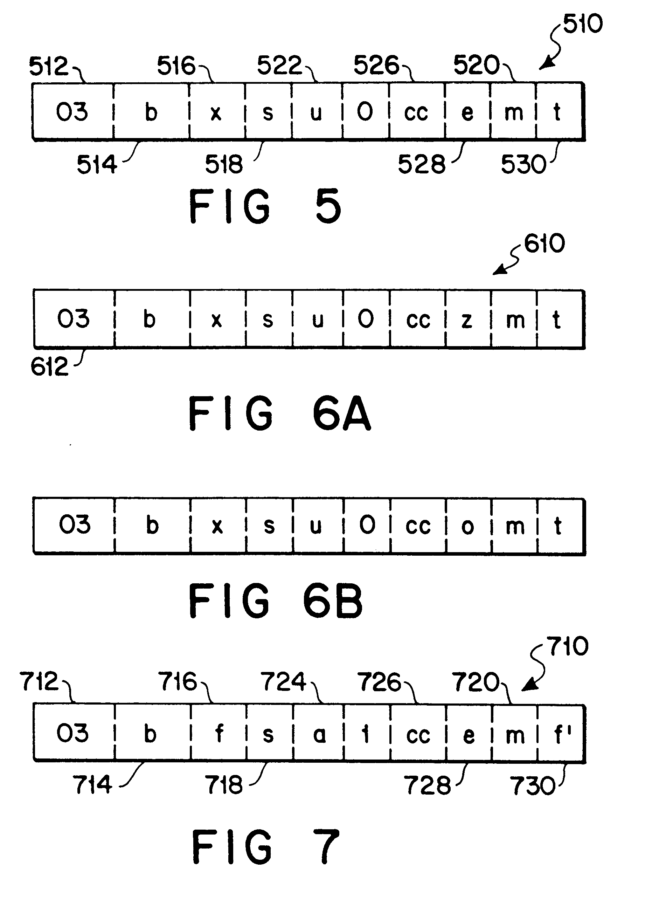

In the case of an instruction set for an indexed load or store 510, the instructions enable loading of data with a possible address modification 120. When address modification 120 is specified with an "m" field 520, then the index register can be shifted 122 or left unshifted 124. This index shift or not 122, 124 is determined by a "u" field 522. Examples of this instruction set 510 are shown in Figures 6A-6B.

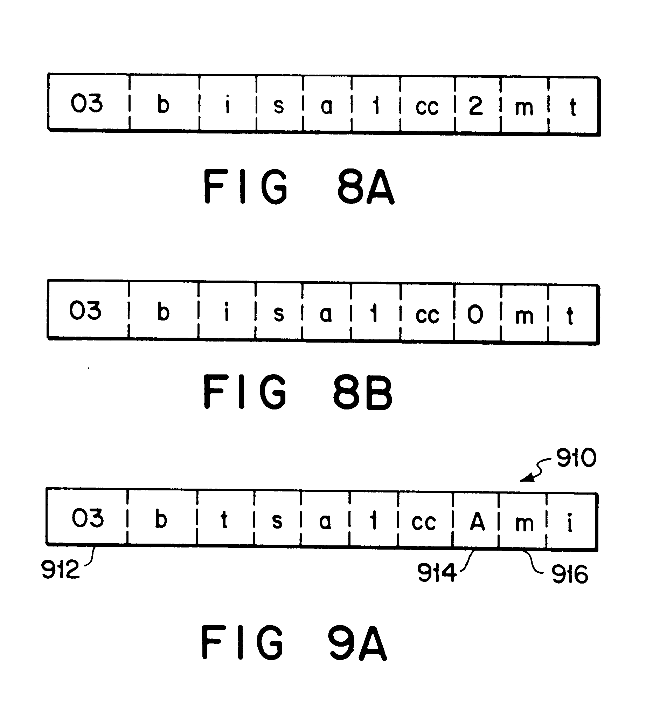

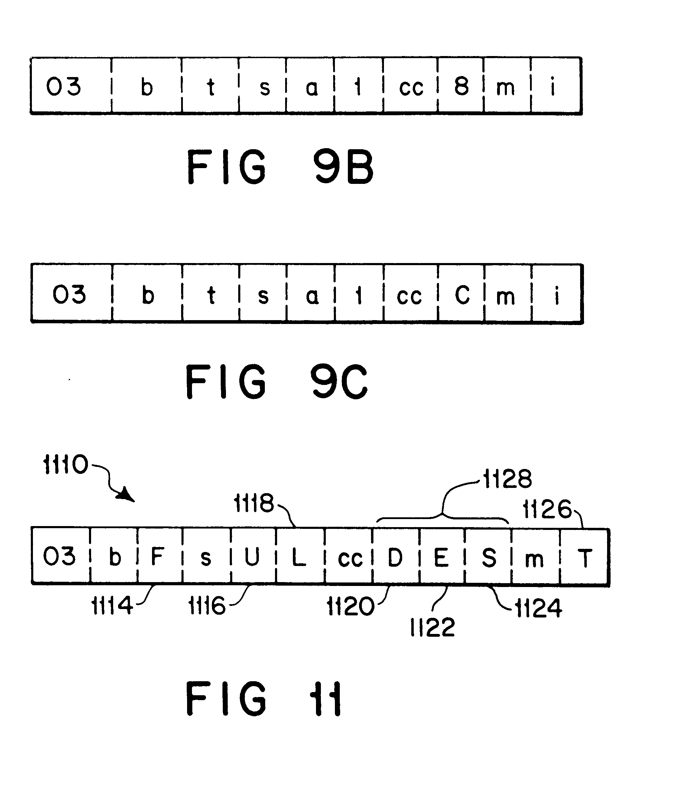

Figure 7 shows the case of an instruction 710 for short displacement load or store. The instruction sequence 710 is defined such that a field "m" 720 determines whether or not an address modification is to be made. When one is made, a further embedded field 724 determines whether the modification is made pre- or post-load or store. In this way, a flexible method of handling data in an autonomous manner is achieved. Examples of instructions of this sort are shown in Figures 8A-B for short displacement loading and Figures 9A-C for short displacement storing.

To effect some of these instructions in accordance with the invention, certain preliminary operations need be made and used, namely,
memory load
   mem_load(addr,low,high), and
memory store
   mem_store(addr,low,high,data)
are used. These operations are described in the ensuing paragraphs.

   1. For a memory load operation "mem_load-(addr,low,high)":
      a. when virtual memory translation is on, that is, when the processor status word (PSW) D-bit is "1", then the memory to be loaded from "mem_load" is the virtual memory with an address comprising the range of bits of virtual memory from the low bit "low" to the high bit "high" beyond the beginning of the byte of virtual memory with address "addr", where "addr" is a 64-bit virtual address;

b. otherwise, the memory to be loaded from "mem_load" is the real memory with an address comprising the range of bits of real memory from the low bit "low" to the high bit "high" beyond the beginning of the byte of real memory with an address comprising the 32 low order bits, that is, bits 32nd to 63rd, of memory "addr".

2. For a memory store operation "mem_store-(addr,low,high,data)":

a. when virtual memory translation is on, that is, when the processor status word (PSW) D-bit is "1", then "data" is assigned to the virtual memory with an address comprising the range of bits of virtual memory from the low bit "low" to the high bit "high" beyond the beginning of the byte of real memory with address "addr", where "addr" is a 64-bit virtual address; and

b. otherwise, "data" is assigned to the real memory with an address comprising the range of bits of real memory from the low bit "low" to the high bit "high" beyond the beginning of the byte of real memory with an address comprising the 32 low order bits, that is, bits 32nd to 63rd, of memory "addr".

The effective address generated for an instruction 210 in Figures 1 and 2 is "eff_addr1-(b,d,s,w,m)", which is calculated as follows:

a. if d < 0 or m = 0, then return the value of "y" with its "w" low-order bits set to zero and assign this to "offset", where "y" is the value of general register "b" added to the value of "d" whose bits are extended to the left with sign bits to a 32-bit quantity taking the rightmost bit as the sign bit;

b. otherwise, return the value of "y" with its "w" low-order bits set to zero and assign this to "offset", where "y" is the value of general register "b" only;

c. If s = 0, then assign to "space" the value of the space register having an address comprising 4 added to the high two bits 0, 1 of general register "b";

d. otherwise, assign the value of space register "s" to "space";

e. then concatenate "space" and "offset" and assign the result to "eff_addr1".

In other words, in the preferred embodiment, the effective space number is the contents of space register "s" if "s" is nonzero, or is the contents of the space register whose number is the sum of 4 and the two high-order bits of general register "b" if "s" is zero. Also, the 14-bit byte displacement d is in 2's complement notation with the sign bit as its rightmost bit.

For instructions other than those for "load a word and modify" and "store a word and modify", an effective offset "offset" is determined by the sum of the contents of general register "b" and the sign-extended displacement "d", with the appropriate number of low-order bits ignored. And for instructions for "load a word and modify" and "store a word and modify", the effective offset "offset" depends on the sign of the displacement "d". If "d" is negative as indicated by its sign bit, the effective offset is the sign-extended value of "d" added to the general register "b", with the appropriate number of low-order bits ignored. This effective offset is the value stored into general register "b" (pre-decrement). If "d" is nonnegative, the effective offset is the original contents of general register "b", with the appropriate number of low-order bits ignored. The sum of the contents of general register "b" and the sign-extended value of "d" is stored into the general register "b" (post-increment).

As examples of the implementation of the invention, operation codes 214, or opcodes, are used fob long displacement load and store instructions 210. These opcodes 214 specify the particular data transfer to be performed; they also specify whether address modification is to take place. These opcodes has the general format shown in Figure 2, namely,

op / b / t / s / d,

where:

op is a 6-bit field 214 specifying the operation code, e.g., load or store, address modification or not, and data size (word, halfword, or byte);

b is a five-bit field 216 identifying the source register;

t is a five-bit field 218 identifying the target register;

s is a two-bit field 220 specifying a space register; and

d is a 14-bit field 212 specifying a displacement.

As a first example, the instruction for loading a word in a general register is

LDW d(s,b),t

and has the specific format shown in Figure 3A, namely,

12 / b / t / s / d,

where 12 is the 6-bit opcode 314 for the instruction LOAD WORD (LDW).

The instruction LDW 310 initially calculates an effective address "eff_addr1" and then loads the aligned word at that address into the general register "t". Specifically, its operation is as follows:

1 . During the first cycle, T:

"eff_addr1(b,d,s,2,0)" is assigned to "addr"; and

2. during the second cycle, T + 1:

"mem_load(addr,0,31)" is assigned to general register "t", where "eff_addr1" and "mem_load" are as described earlier.

As a second example, the instruction for loading a word into a general register and then performing an address modification is

LDWM d(s,b),t

and has the specific format shown in Figure 3B, namely,

13 / b / t / s / d,

where 13 is the 6-bit opcode 316 for the instruction LOAD WORD and MODIFY (LDWM).

This instruction 311 calculates an effective address "eff_addr1" and loads the aligned word at that address into the general register "t". The contents of general register "b" is either pre-decremented or post-incremented by the absolute value of the displacement "d" 318, according to the sign of the displacement 318. Specifically, the operation of the instruction 311 is as follows:

1. During the first cycle, T:

a. "eff_addr1(b,d,s,2,1)" is assigned to "addr"; and

b. the sum of the contents of general register "b" and the quantity resulting from removing the low-order bit of "d" 318 and extending the remainder on the left with sign bits to a 32-bit quantity, taking the removed bit as the sign bit, is assigned to general register "b".

2. During the second cycle, T + 1:

"mem_load(addr,0,31)" is assigned to general register "t".

As a third example, the instruction for storing a word from a general register is

STW t,d(s,b)

and has the specific format shown in Figure 4A, namely,

1A / b / t / s / d,

where 1A is the 6-bit opcode 412 for the instruction STORE WORD (STW) 410. Specifically, the instruction 410 initially calculates an effective address "eff_addr1" and stores the contents of general register "t" into the aligned word at that address. In operation, the instruction 410 proceeds as follows:

During the first cycle, T:

a. the contents of effective address "eff_addr1(b,d,s,2,0)" is assigned to "addr"; and

b. a memory store as described earlier is made for "mem_store(addr,0,31,GR[t])", where GR[t] is general register "t".

An alternate embodiment of the invention is the instruction for indexed loads 510 in Figure 5 and the instruction for short displacement loads and stores 710 in Figure 7. The general format of an indexed load instruction is shown in Figure 5, namely,

03 / b / x / s / u / 0 / cc / e / m / t

and of short displacement loads and stores is shown in Figure 7, that is,

03 / b / f / s / a / l / cc / e / m / f',

where:

03 is a 6-bit field code 512, 712 to specify the present load or store operation;

b is a 5-bit field 514, 714 identifying a source register "b";

x is a 5-bit field 516 identifying a source register "x";

f is a 5-bit field 716 identifying a signed immediate field in the case of load instructions and a control source register in the case of store instructions;

s is a 2-bit field 518, 718 identifying a space register "s";

u is a 1-bit specifier 522, where a "0" indicates an index register, and a "1" indicates an index register shifted by the data size, that is, the index value is multiplied by the size of the data item being loaded;

a is a premodify or postmodify bit 724, where, whenever the modification bit 520, 720 m = 1, "0" signifies modification after data movement and "1" signifies modification before data movement;

cc is a 2-bit field 526, 726 for use as cache control bits;

e is a 4-bit field 528, 728 specifying an operation code extension;

m is a modify bit 520, 720;

t is a 5-bit field 530 identifying a source register "t" in the case of store instructions and a target register "t" in the case of load instructions; and

f' is a 5-bit field 730 identifying a target register in the case of load instructions and an immediate field in the case of store instructions.

Note that the formats in Figures 5 and 7 are identical but for the "x"/"f", "a"/"u" and "0"/"1" pairs. They have a common opcode of "03". The "x" and "f" fields can both be represented by "F", a 5-bit field that identifies an immediate or a register. Likewise, the other pairs can be represented by a "U" field and an "L" field; these fields are described below. The remaining fields in combination with these fields distinguish the different operations within this major operation code. The result, as shown in Figure 11, is a major operation code 1110 representing the instructions in both Figures 5 and 7. In Figure 11, the "e" field is described in further details.

The format of the major instruction shown in Figure 11 is reproduced here:

03 / b / F / s / U / L / cc / D / E / S / m / T, where:

F is a 5-bit displacement field 1114 representing either "x" 516 or "f" 716 as before;

U is a 5-bit field 1116 representing either "u" 522 or "a" 724 as before;

L is a 1-bit literal 1118, where a "1" signifies using an immediate as a displacement and a "0" signifies using the value of an index register as a displacement;

D is a 1-bit field 1120, where a "1" signifies store and a "0" signifies load;

E is a 1-bit field 1122 to signify special operation, e.g., store byte or store bytes;

S̄ is a 2-bit field 1124 for specifying data size, that is, "00" means no shift, or byte; "01" means shift 1, or halfword; "10" means shift 2, or word; and "11" means shift 3, or double word;

T is a 5-bit field 1126 representing "t" 530 or "f'" 730 as before; and

"b", "s", "cc", and "m" are as before.

In this format, the concatenation 1112 of fields "D", "E" and "S" represent the previously described 4-bit field "e" 528, 728 used for code extension.

The cache control bits "cc" 526, 726 in the instructions in accordance with the invention provide a special advantage to the computer system using a cache memory. This "cc" field, which is imbedded within the instruction, provides cache hints to the cache memory. These cache hints are information encoded to identify the data structure being accessed by the load or store data instruction, e.g., STACK POP for load, STACK PUSH for store, S̄EQUENTIAL READ for load, and SEQUENTIAL WRITE for store. This optional information that is supplied may be used by a cache controller to reduce cache misses, to reduce memory traffic between cache and main memory, to determine whether or not to prefetch the next cache line, and to provide any other instructions that would improve the performance of the cache memory.

If address modification is specified in an indexed load, an effective offset "offset" is defined as the contents of the general register "b" in a postmodify situation. Address modification results in replacing the contents of general register "b" by the sum of the index value, possibly shifted by the data size, and the previous contents of general register "b". This operation is given by the following two routines:

1. For the index value "ind_val(x,sh,u)", the following operation is made:

    a. if u = 0, then the value of general register "x" is assigned to "ind_val";

    b. otherwise, the value of general register "x", left-shifted by "sh", is assigned to "ind_val".

2. For calculating the "eff_addr2(b,s,x,m,u,sh)", an effective address, the following operation is made:

    a. if m = 1, then the value of general register "b" with its "sh" low-order bits set to zero is assigned to effective offset "offset";

    b. otherwise, the sum of the value of general register "b" and "ind_val(x,sh,u)", as defined above, with its "sh" low-order bits set to zero, is assigned to effective offset "offset"; and

    c. if s = 0, then the value of the space register having an address comprising the value of the first two high-order bits "0" and "1" of general register "b" added to 4 is assigned to a space register "space";

    d. otherwise, the contents of space register "s" is assigned to a space register "space"; and

    e. the concatenation of the values of "space" and "offset" is assigned to effective address "eff_addr2".

As a first example, the instruction for loading an index word 610 is

    LDWX,u,m,cc x(s,b),t

and has the format as shown in Figure 6A, namely,

    03 / b / x / s / u / 0 / cc / 2 / m / t,

where 03 is the opcode 612 for the operation LOAD WORD INDEXED (LDWX). Its operation is as follows:

1. During the first cycle, T:

    a. effective address "eff_addr2(b,s,x,m,u,2)" is assigned an address "addr"; and

    b. the value of general register "b" added to the index value "ind_val(x,2,u)" replaces the original value in general register "b".

2. During the second cycle, T + 1:

the contents of the load memory "mem_load(addr,0,31)",

    described above, is assigned to general register "t".

As a second example, the instruction for storing a short word (STORE WORD SHORT) 910 is

    STWS,m,a,cc t,i(s,b)

and has the format as shown in Figure 9A, namely,

    03 / b / t / s / a / l / cc / A / m / i,

where the fields are as described in the general format and:

03 is a 6-bit field 912 specifying the operation code for STORE WORD SHORT; and

A is a 4-bit field 914 specifying an operation code extension.

This instruction 910 calculates an effective address "eff_addr3" and the value of general register "t" is stored into the aligned word at that address. Specifically,

1. During the cycle T:

    a. effective address "eff_addr3(b,i,s,a,m,2)" is calculated analogously to the previous calculation for "eff_addr2(b,s,x,m,u,sh)", above, and the value thereto is assigned to an address "addr";

b. if the modification bit 916 m = 1, that is, if modify is specified, then the value of general register "b" is added to "low_sign_ext(i)", which is calculated analogously to that in previous examples, and the sum value is assigned to general register "b"; in other words, the original value of general register "b" is replaced with the sum; and

2. during the second cycle, T + 1, the operation "mem_store(addr,0,31,GR[t])" described above is made.

In all the above examples, in a pipelined computer system, the first cycle T of a subsequent load or store instruction (LOAD, STORE) may be executed simultaneously with the second cycle (T + 1) of a current load or store instruction so that the effective execution time for one load or store instruction is still one cycle.

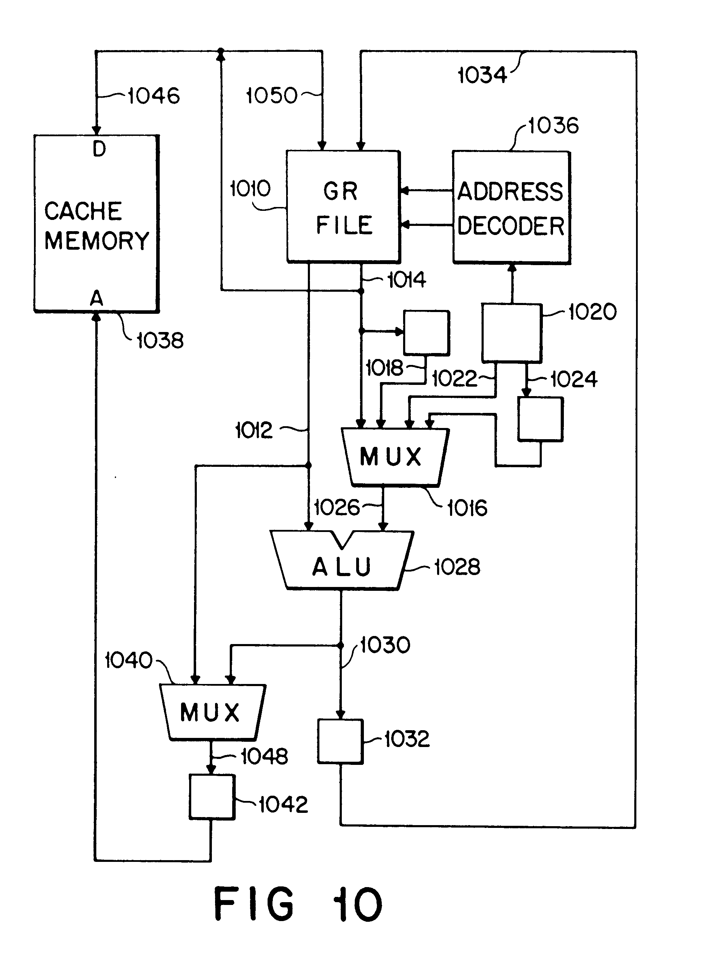

Figure 10 shows an apparatus in accordance with the preferred embodiment for implementing a load or store instruction having a code for address modification. Accordingly, values of a base register "b" (not shown) and an index register "x" (not shown) are read onto a "b" register bus 1012 and an index register bus 1014, respectively, from a general register file 1010. The index register bus 1014 is coupled to a four-to-one multiplexer 1016; it is also coupled to the multiplexer 1016 as a shifted value 1018. Also coupled to the multiplexer 1016 are values 1022, 1024 from an instruction register 1020. These values 1022, 1024 represent long and short displacements to be implemented with the load or store instruction. The "b" value on the "b" bus 1012 and the output 1026 of the multiplexer 1016 are coupled to an arithmetic logic unit (ALU) 1028, where address generation is performed in response to the two inputs 1012, 1026. The result 1030 from the ALU 1028 is used for address modification by coupling it through an optional pipeline register 1032 on a result bus 1034 back to the general register file 1010, where the modified address generated is assigned in the base register (not shown). The registers in the general register 1010 are addressed through an address decoder 1036, which responds to inputs from the instruction register 1020. The output 1030 of the ALU 1028 is also coupled to a cache memory 1038 through a two-to-one multiplexer 1040 and an optional pipeline register 1042. The two-to-one multiplexer 1040 has as its inputs the "b" register value 1012 and the modified address 1030. Data 1046 addressed by the output 1048 of the two-to-one multiplexer 1040 in the cache memory 1038 and data 1050 from the general register file 1010 are loaded to the general register file 1010 and the cache memory 1038, respectively. The two-to-one multiplexer 1040 is responsive to a pre- or post-modification specifier, and the four-to-one multiplexer 1016 is responsive to a displacement specifier. The hardware elements shown in Figure 10 are those found in all computer systems; no special or additional hardware elements are required to implement the instruction for load and store data with address modification to result in a highly efficient and greatly simplified one-cycle operation of the instruction.

## Claims

1. A computer system comprising:
   A. an instruction comprising:
      a. a first field (b) specifying a base register;
      b. a second field (d) specifying a displacement; and
      c. a third field (m) specifying modification of a selected address; and
   B. means for performing operations in response to said instruction;
   characterised in that:
      said first, second and third fields are comprised in a single instruction suitable for operation within a single cycle of said computer system, and
      wherein said displacement is either the value of an index (u) shifted or unshifted or a displacement shifted by a data size as determined by fields embedded within said single instruction.

2. A system according to claim 1 wherein said instruction further comprises a fourth field (116,118), also forming part of said single instruction, specifying modification of a selected address before or after a selected operation.

3. A system according to claim 2 wherein said fourth field is the sign bit of said second field.

4. A system according to claim 3 wherein said fourth field is a single bit.

5. A system according to any of claims 1 to 4 wherein said second field (d) is a field for specifying immediate data.

6. A method for transferring data between a first and second storage device in a computer system comprising:
      providing an instruction comprising:
      a. a first field (b) specifying a base register;
      b. a second field (d) specifying a displacement; and
      c. a third field (m) specifying modification of a selected address, and

performing operations in response to said instruction;

characterised in that:

said first, second and third fields are comprised in a single instruction suitable for operation within a single cycle of said computer system, and

wherein said displacement is either the value of an index (u) shifted or unshifted or a displacement shifted by a data size as determined by fields embedded within said single instruction.

7. A method according to claim 6, comprising the steps of:

locating a base address and a displacement from an instruction within a cycle of said computer system;

identifying from said instruction within said cycle of said computer system a selected method from a plurality of methods for forming an address to said first storage device;

determining from a sign bit of said displacement when said base address will be augmented by said displacement;

forming said address according to said instruction within said cycle of said computer system; and

transferring data between said second storage device and said address of said first storage device within said cycle of said computer system.

8. A method according to claim 6, comprising the steps of:

locating a base address and an index register from an instruction within a cycle of said computer system;

identifying from said instruction within said cycle of said computer how much the contents of said index register will be shifted;

shifting said contents of said index register in response to said instruction within said cycle of said computer system;

determining from said instruction within said cycle of said computer system when to augment the contents of said base register with said contents of said shifted index register;

forming an address to said first storage device in response to said instruction within said cycle of said computer by summing said contents of said index register and said base address;

augmenting said contents of said base register within said cycle of said computer system according to said instruction; and

transferring data between said second storage device and said address of said first storage device within said cycle of said computer system.

9. A method according to claim 6, comprising the steps of:

identifying a base address, a displacement, and data size from an instruction within a cycle of said computer system;

shifting said displacement by said data size in response to said instruction within said cycle of said computer system;

identifying from said instruction within said cycle of said computer system when said base register is augmented by said shifted displacement;

forming an address to said first storage device by adding said shifted displacement to the contents of said base register within said cycle of said computer system;

augmenting said contents of said base register according to said instruction within said cycle of said computer and

transferring data between said second storage device and said address of said first storage device within said cycle of said computer system.

**Patentansprüche**

1. Rechnersystem mit
   A. einem Befehl,der
      a. ein erstes, ein Basisregister spezifizierendes Feld (b)
      b. ein zweites, eine Verschiebung spezifizierendes Feld (d), und
      c. ein drittes, eine Abänderung einer ausgewählten Adresse spezifizierendes Feld (m) aufweist, und
   B. einer Vorrichtung zum Durchführen von Operationen nach Maßgabe dieses Befehles,
   dadurch **gekennzeichnet,** daß
   das erste, zweite und das dritte Feld in einem einzigen Befehl zusammengefaßt sind, der für eine Operation innerhalb eines einzelnen Zyklus des Rechnersystems geeignet ist, und
   die Verschiebung entweder den Wert eines um eine Datengröße verschobenen oder eines unverschobenen Index (u) oder einer um die Datengröße verschobenen Verschiebung hat, wobei die Datengröße durch in diesen einzelnen Befehl eingebettete Felder bestimmt ist.

2. System nach Anspruch 1, bei dem der Befehl ein viertes Feld (116,118) aufweist, das ebenfalls einen Teil des einzelnen Befehles bildet und die Abänderung einer ausgewählten Adresse vor oder nach einer ausgewählten Operation spezifiziert.

3. System nach Anspruch 2, bei dem das vierte Feld, das Vorzeichenbit des zweiten Feldes ist.

4. System nach Anspruch 3, bei dem das vierte Feld aus einem einzelnen Bit besteht.

5. System nach einem der Ansprüche 1 bis 4, bei dem das zweite Feld (d) ein Feld zum Spezifizieren von Direktdaten ist.

6. Verfahren zur Übertragung von Daten zwischen einem ersten und einem zweiten Speicher in einem Rechensystem, bei dem ein Befehl vorgesehen wird, der

a. ein erstes Feld (b) zum Spezifizieren eines Basisregisters,
b. ein zweites Feld (d) zum Spezifizieren einer Verschiebung und
c. ein drittes Feld (m) zum Spezifizieren einer Abänderung einer ausgewählten Adresse

aufweist, und bei dem Operationen nach Maßgabe dieses Befehles durchgeführt werden, dadurch **gekennzeichnet,** daß

das erste, das zweite und das dritte Feld in einem einzigen Befehl zusammengefaßt werden, der für eine Operation innerhalb eines einzelnen Zyklus des Rechnersystems geeignet ist, und

die Verschiebung entweder den Wert eines um eine Datengröße verschobenen oder eines unverschobenen Index (u) oder einer um eine Datengröße verschobenen Verschiebung annimmt, wobei die Datengröße durch in dem einzelnen Befehl eingebettete Felder bestimmt wird.

7. Verfahren nach Anspruch 6, bei dem
eine Basisadresse und eine Verschiebung eines Befehls innerhalb eines Zyklus des Rechnersystems lokalisiert werden,
aus dem Befehl innerhalb dieses Zyklus des Rechnersystems ein ausgewähltes Verfahren unter einer Vielzahl von Verfahren identifiziert wird, um eine Adresse für den ersten Speicher zu bilden,
aus einem Vorzeichenbit der Verschiebung bestimmt wird, wann die Basisadresse durch die Verschiebung erhöht werden wird,
nach Maßgabe des Befehls innerhalb dieses Zyklus des Rechnersystems die Adresse gebildet wird und

Daten zwischen dem zweiten Speicher und der Adresse des zweiten Speichers innerhalb dieses Zyklus des Rechnersystems übertragen werden.

8. Verfahren nach Anspruch 6, bei dem
eine Basisadresse und ein Indexregister von einem Befehl innerhalb eines Zyklus des Rechnersystems lokalisiert werden,
aus diesem Befehl innerhalb dieses Zyklus des Rechnersystems herausgefunden wird, ein wie großer Anteil des Inhalts des Indexregisters verschoben wird,
der Inhalt des Indexregisters nach Maßgabe des Befehles innerhalb dieses Zyklus des Rechnersystems verschoben wird,
aus dem Befehl innerhalb dieses Zyklus des Rechnersystems bestimmt wird, wann der Inhalt des Basisregisters um den Inhalt des verschobenen Indexregisters erhöht werden wird,
eine Adresse für den ersten Speicher nach Maßgabe des Befehles innerhalb dieses Zyklus des Rechnersystems gebildet wird, indem der Inhalt des Indexregisters zu der Basisadresse addiert wird,
der Inhalt des Basisregisters innerhalb dieses Zyklus des Rechnersystems nach Maßgabe des Befehls erhöht wird und
Daten zwischen dem zweiten Speicher und der Adresse des ersten Speichers innerhalb dieses Zyklus des Rechnersystems übertragen werden.

9. Verfahren nach Anspruch 6, bei dem
eine Basisadresse, eine Verschiebung und eine Datengröße von einem Befehl innerhalb eines Zyklus des Rechnersystems ermittelt werden,
die Verschiebung um die Datengröße nach Maßgabe des Befehles innerhalb dieses Zyklus des Rechnersystemsverschoben wird,
aus dem Befehl innerhalb dieses Zyklus des Rechnersystems festgestellt wird, wann das Basisregister um die verschobene Verschiebung erhöht wird,
eine Adresse für den ersten Speicher gebildet wird, indem die verschobene Verschiebung innerhalb dieses Zyklus des Rechnersystems zum Inhalt des Basisregisters addiert wird,
der Inhalt des Basisregisters nach Maßgabe des Befehls innerhalb dieses Zyklus des Rechnersystems erhöht wird und
die Daten zwischen dem zweiten Speicher und der Adresse des ersten Speichers innerhalb dieses Zyklus des Rechnersystems übertragen werden.

**Revendications**

1. Un système d'ordinateur comprenant :

A. une Instruction comprenant :

a. un premier champ (b) spécifiant un registre de base;

b. un deuxième champ (d) spécifiant un déplacement; et

c. un troisième champ (m) spécifiant une modification d'une adresse choisie; et

B. un moyen de mise en oeuvre d'opérations en réponse à ladite instruction;

caractérisé en ce que

lesdits premier, deuxième et troisième champs sont compris dans une instruction unique appropriée pour une opération à l'intérieur d'un cycle unique dudit système d'ordinateur, et

dans lequel ledit déplacement est, selon la détermination effectuée par des champs incorporés à l'intérieur de ladite instruction unique, soit la valeur d'un index (u) décalé ou non décalé, soit un déplacement décalé d'une dimension de donnée.

2. Un système selon la revendication 1 dans lequel ladite instruction comprend en outre un quatrième champ (116, 118) faisant également partie de ladite instruction unique, spécifiant une modification d'une adresse choisie avant ou après une opération choisie.

3. Un système selon la revendication 2 dans lequel ledit quatrième champ est le bit de signe dudit deuxième champ.

4. Un système selon la revendication 3 dans lequel ledit quatrième champ est un bit unique.

5. Un système selon l'une quelconque des revendications 1 à 4 dans lequel ledit deuxième champ (d) est un champ prévu pour spécifier des données immédiates.

6. Un procédé de transfert de données entre un premier et un deuxième dispositifs de mémorisation dans un système d'ordinateur comprenant les étapes consistant à:

fournir une instruction comprenant :

a. un premier champ (b) spécifiant un registre de base;

b. un deuxième champ (d) spécifiant un déplacement; et

c. un troisième champ (m) spécifiant une modification d'une adresse choisie, et

effectuer des opérations en réponse à ladite instruction;

caractérisé en ce que :

lesdits premier, deuxième et troisième champs sont compris dans une instruction unique appropriée pour une opération à l'intérieur d'un cycle unique dudit système d'ordinateur, et

dans lequel ledit déplacement est, selon la détermination effectuée par des champs incorporés à l'intérieur de ladite instruction unique, soit la valeur d'un index (u) décalé ou non décalé, soit un déplacement décalé d'une dimension de donnée.

7. Un procédé selon la revendication 6, comprenant les étapes consistant à :

localiser une adresse de base et un déplacement à partir d'une instruction située à l'intérieur d'un cycle dudit système d'ordinateur;

identifier, à partir de ladite instruction située à l'intérieur dudit cycle dudit système d'ordinateur, un procédé choisi parmi plusieurs procédés pour former une adresse vers ledit premier dispositif de mémorisation;

déterminer à partir d'un bit de signe dudit déplacement quand ladite adresse de base sera augmentée dudit déplacement;

former ladite adresse selon ladite instruction située à l'intérieur dudit cycle dudit système d'ordinateur; et

transférer des données entre ledit deuxième dispositif de mémorisation et ladite adresse dudit premier dispositif de mémorisation à l'intérieur dudit cycle dudit système d'ordinateur.

8. Un procédé selon la revendication 6, comprenant les étapes consistant à :

localiser une adresse de base et un registre d'index à partir d'une instruction située à l'intérieur d'un cycle dudit système d'ordinateur;

identifier à partir de ladite instruction située à l'intérieur dudit cycle dudit ordinateur la valeur dont le contenu dudit registre d'index sera décalée;

décaler ledit contenu dudit registre d'index en réponse à ladite instruction située à l'intérieur dudit cycle dudit système d'ordinateur;

déterminer, à partir de ladite instruction située à l'intérieur dudit cycle dudit système d'ordinateur, quand il y a lieu d'augmenter le contenu dudit registre de base à l'aide dudit contenu dudit registre d'index décalé;

former une adresse vers ledit premier dispositif de mémorisation, en réponse à ladite instruction située à l'intérieur dudit cycle dudit ordinateur, en additionnant lesdits contenus dudit registre d'index et de ladite adresse de base;

augmenter ledit contenu dudit registre de base à l'intérieur dudit cycle dudit système d'ordinateur selon ladite instruction; et

transférer des données entre ledit deuxième dispositif de mémorisation et ladite adresse dudit premier dispositif de mémorisation à l'intérieur dudit cycle dudit système d'ordinateur.

9. Un procédé selon la revendication 6, comprenant les étapes consistant à :

identifier une adresse de base, un déplacement et une dimension de donnée à partir d'une instruction située à l'intérieur d'un cycle dudit système d'ordinateur;

décaler de ladite dimension de données ledit déplacement en réponse à ladite instruction située à l'intérieur dudit cycle dudit système d'ordinateur;

identifier, à partir de ladite instruction située à l'intérieur dudit cycle dudit système d'ordinateur, quand ledit registre de base est augmenté dudit déplacement décalé;

former une adresse vers ledit premier dispositif de mémorisation en additionnant ledit déplacement décalé au contenu dudit registre de base à l'intérieur dudit cycle dudit système d'ordinateur;

augmenter ledit contenu dudit registre de base selon ladite instruction située à l'intérieur dudit cycle dudit ordinateur et

transférer des données entre ledit deuxième dispositif de mémorisation et ladite adresse dudit premier dispositif de mémorisation à l'intérieur dudit cycle dudit système d'ordinateur.

EP 0 206 653 B1

FIG 1

214  218  212  210

| op | b | t | s | d |

216  220

# FIG 2

310

| 12 | b | t | s | d |

314

# FIG 3A

311

| 13 | b | t | s | d |

316  318

# FIG 3B

| 10 | b | t | s | d |

# FIG 3C

14

410

| 1A | b | t | s | d |
|---|---|---|---|---|

412

# FIG 4A

| 1B | b | t | s | d |
|---|---|---|---|---|

# FIG 4B

| 18 | b | t | s | d |
|---|---|---|---|---|

# FIG 4C

510

512    516    522    526    520

| 03 | b | x | s | u | 0 | cc | e | m | t |

514    518    528    530

# FIG 5

610

| 03 | b | x | s | u | 0 | cc | z | m | t |

612

# FIG 6A

| 03 | b | x | s | u | 0 | cc | o | m | t |

# FIG 6B

710

712    716    724    726    720

| 03 | b | f | s | a | 1 | cc | e | m | f' |

714    718    728    730

# FIG 7

| 03 | b | i | s | a | 1 | cc | 2 | m | t |
|----|---|---|---|---|---|----|---|---|---|

## FIG 8A

| 03 | b | i | s | a | 1 | cc | 0 | m | t |
|----|---|---|---|---|---|----|---|---|---|

## FIG 8B

910

| 03 | b | t | s | a | 1 | cc | A | m | i |
|----|---|---|---|---|---|----|---|---|---|

912                                              914      916

## FIG 9A

| 03 | b | t | s | a | 1 | cc | 8 | m | i |
|----|---|---|---|---|---|----|---|---|---|

## FIG 9B

| 03 | b | t | s | a | 1 | cc | C | m | i |
|----|---|---|---|---|---|----|---|---|---|

## FIG 9C

1110

1118 · 1128 · 1126

| 03 | b | F | s | U | L | cc | D | E | S | m | T |
|----|---|---|---|---|---|----|---|---|---|---|---|

1114 1116 1120 1124

1122

## FIG 11

FIG 10